# FASCICULE DE BREVET EUROPEEN

(11) **EP 2 125 391 B1**
(45) Date de publication et mention de la délivrance du brevet: **15.02.2012**
(21) Numéro de dépôt: 07857049.6
(22) Date de dépôt: 21.12.2007
(51) Int. Cl.: B60C 17/06

(54) **PNEUMATIQUE A ENDURANCE AMELIOREE VIS-A-VIS DES CHOCS EXTERNES**
REIFEN MIT VERBESSERTER BESTÄNDIGKEIT GEGEN STÖSSE VON AUSSEN
TIRE WITH IMPROVED ENDURANCE TO EXTERNAL IMPACTS

(30) Priorité: 28.12.2006 FR 0611552
(43) Date de publication de la demande: 02.12.2009
(73) Titulaire: Société de Technologie MICHELIN, 63000 Clermont-Ferrand (FR); MICHELIN Recherche et Technique S.A., 1763 Granges-Paccot (CH)
(72) Inventeur: MERINO, LOPEZ, José, F-63200 Riom (FR)
(74) Mandataire: Randl, Oliver Georg
(86) Numéro de dépôt international: PCT/EP2007/011334
(87) Numéro de publication internationale: WO 2008/080583

(56) Documents cités:
- EP-A- 0 668 174
- WO-A1-02/18157
- FR-A- 2 317 111
- US-A- 5 591 283

## Description

La présente invention est relative aux pneumatiques montés sous pression sur les jantes de véhicules roulants. Elle concerne tout particulièrement les dispositions propres à renforcer la résistance de ces équipements aux dommages auxquels ils sont exposés en roulage dans le cas d'impact avec des obstacles au sol tels que trottoirs, nids de poule.

On sait en effet qu'un pneumatique qui roule en mode gonflé sur le sol est susceptible de subir dans les conditions habituelles de son utilisation en vitesse et en charge des chocs sur sa bande de roulement ou ses flancs dont la fréquence et l'intensité sont souvent considérables. C'est une de ses fonctions principales de les encaisser et de les amortir sans que la roue du véhicule concernée en soit sensiblement affectée, ni dans son mouvement ni dans son intégrité. Cette faculté est une raison essentielle de leur pérennité dans les véhicules roulants depuis un siècle.

Il arrive toutefois que cette faculté rencontre ses limites lorsque les conditions de l'impact du pneumatique avec un obstacle sont telles que la paroi de l'enveloppe impactée arrive en butée à l'intérieur de la chambre pneumatique, soit directement contre la jante sur laquelle est monté le pneumatique, soit plus habituellement contre une autre zone de la paroi de l'enveloppe elle-même en appui direct sur la jante de roue. C'est notamment le cas lorsque cette jante présente classiquement une saillie radiale externe par rapport au siège proprement dit. Une telle saillie est en général prévue pour empêcher le bourrelet pneumatique de sortir de la jante sous l'effet de contraintes de direction axiale au cours des manoeuvres de la roue. Elle est désignée habituellement sous l'appellation de crochet ou rebord de jante.

Dans le cas qui vient d'être cité, l'impact avec l'obstacle transmet des efforts brefs mais très intenses, pouvant atteindre plusieurs tonnes, aux pièces en butée mais aussi, au-delà de la jante, aux attaches de suspension mécaniques de l'ensemble de roue, voire à la caisse du véhicule. Elles sont susceptibles de créer des dommages graves aux organes de la suspension et de déformer de façon permanente la caisse du véhicule. Les concepteurs de véhicules sont donc amenés à prévoir des systèmes d'amortissement suffisants pour prévenir ces dommages et à dimensionner la caisse des véhicules en fonction des cas extrêmes normalement prévisibles.

Malheureusement, même lorsque le véhicule proprement dit est convenablement protégé, l'enveloppe pneumatique soumise à ce type d'incident est susceptible de souffrir gravement des conséquences du phénomène qui vient d'être évoqué. Dans la section impactée par le choc, la paroi interne du pneumatique se trouve soudainement repliée et pincée entre l'obstacle et la saillie radiale de la jante. Ceci peut entraîner la rupture de la paroi et le pneumatique perd alors soudainement sa pression de gonflage ce qui la plupart du temps implique l'immobilisation immédiate du véhicule. Lorsque l'enveloppe a résisté, on constate la plupart du temps que ses composants ont été détériorés par l'incident ; des renflements dans les flancs ou d'autres signes indiquent à l'expert que la structure de l'enveloppe a été affaiblie et que sa paroi risque de se rompre sous l'effet des flexions répétées de ses composants, à plus ou moins brève échéance, ce qui est évidemment incompatible avec les conditions de sécurité nécessaires en roulage.

La présente invention vise à répondre à ces préoccupations et réduire les risques encourus par un pneumatique lorsqu'il se trouve confronté au choc d'obstacles sur la chaussée, par exemple lors de la rencontre avec un nid de poule ou une bordure de trottoir.

A cet égard, l'invention a notamment pour objet un pneumatique destiné à être monté sous pression sur une jante de roue de véhicule, laquelle présente au moins un siège circonférentiel pour l'assise d'un bourrelet du pneumatique et une saillie radiale externe au voisinage du siège, ce pneumatique comprenant classiquement un sommet circonférentiel pourvu d'une bande de roulement pour assurer le contact avec le sol, au moins un bourrelet présentant une portion propre à se monter sur le siège de jante et une paroi comportant une structure de gomme et de renforts reliant le sommet au bourrelet, l'ensemble définissant avec la jante une cavité pneumatique. Selon une disposition principale de l'invention, le pneumatique comporte au moins un élément de protection localisé dans un secteur où la paroi du pneumatique entre le sommet et le bourrelet est susceptible d'être pincée entre la saillie et un obstacle externe dans une zone de sa circonférence, lorsqu'un choc de la bande de roulement contre un tel obstacle provoque la fermeture de la cavité interne du pneumatique, en créant momentanément des contraintes de compression élevées perpendiculairement à la paroi du pneumatique dans la zone. L'idée fondamentale de l'invention consiste à doter le pneumatique d'un élément de protection possédant une compressibilité globale avec capacité de déformation élastique à module de rigidité élevé dans la direction de ces contraintes, déterminées pour les amortir au moins partiellement sans provoquer simultanément de contrainte préjudiciable tangentiellement à la paroi et, notamment, à la liaison entre la gomme et les renforts de la paroi, suivant les renforts.

La demanderesse a pu observer de façon tout à fait inattendue que les fils ou câbles de renforts utilisés, notamment les renforts de nappe carcasse radiale, dans les parois de flanc de pneumatiques soumis à des chocs pincement lors du roulage sur des chaussées très accidentées ou avec des conditions d'utilisation de véhicule relativement extrêmes avaient tendance à se rompre en traction sous l'effet des contraintes engendrées par le pincement de l'enveloppe, ou au moins de subir des élongations au-delà de leur limite élastique, provoquant ainsi l'apparition de zones de faiblesse à la fatigue.

Ainsi, l'élément de protection prévu conformément à l'invention permet de diminuer les sollicitations en tension de la paroi, notamment des renforts du pneumatique, dans l'environnement du point de pincement, grâce au choix approprié de ses caractéristiques de compressibilité permettant d'absorber au moins en partie les contraintes de déformation engendrées dans la direction des efforts de pincement proprement dits. Par compréhensibilité globale ou apparente, on entend ici la variation du volume apparent de l'élément de protection dans la direction de la contrainte qui en est la cause.

Un moyen particulièrement intéressant pour réaliser l'élément de protection est fondé sur l'emploi d'un matériau intrinsèquement incompressible, mais avec des formes de réalisation permettant de conférer à ce matériau une certaine compressibilité dans la direction de la contrainte appliquée, tout en conservant un module élevé. L'obtention de cette compressibilité permet une variation du volume apparent ou global occupé par le matériau en question.

Sous un premier aspect, l'invention consiste en un pneumatique destiné à être monté sous pression sur une jante de roue de véhicule, laquelle présente au moins un siège circonférentiel pour l'assise d'un bourrelet du pneumatique et une saillie radiale externe au voisinage du siège, ce pneumatique comprenant :
- un sommet circonférentiel pourvu d'une bande de roulement pour assurer le contact avec le sol ;
- au moins un bourrelet présentant une portion propre à se monter sur le siège de jante ; et
- une paroi comportant une structure de gomme et de renforts reliant le sommet au bourrelet.

L'ensemble définit avec la jante une cavité pneumatique. Le pneumatique comprenant en outre au moins un élément de protection localisé dans un secteur où la paroi du pneumatique entre le sommet et le bourrelet est susceptible d'être pincée entre la saillie et un obstacle externe au pneumatique en réponse à un choc violent, dû à la rencontre de la bande de roulement avec cet obstacle et qui provoque la fermeture de la cavité interne du pneumatique dans ce secteur et l'apparition momentanée de contraintes de compression élevées perpendiculairement à la paroi du pneumatique, l'élément de protection étant capable de se déformer de manière élastique dans la direction perpendiculaire à la paroi du pneumatique. L'élément de protection est réalisé à l'aide d'une mousse en matériau à base caoutchoutique avec une rigidité supérieure à 10 MPa (et de préférence supérieure à 25 MPa) et un taux de vide entre 15 % et 60 % (et de préférence entre 25 % et 40 %).

Sous un deuxième aspect, l'invention consiste en un pneumatique destiné à être monté sous pression sur une jante de roue de véhicule, laquelle présente au moins un siège circonférentiel pour l'assise d'un bourrelet du pneumatique et une saillie radiale externe au voisinage du siège, ce pneumatique comprenant :
- un sommet circonférentiel pourvu d'une bande de roulement pour assurer le contact avec le sol ;
- au moins un bourrelet présentant une portion propre à se monter sur le siège de jante ; et
- une paroi comportant une structure de gomme et de renforts reliant le sommet au bourrelet.
L'ensemble définit avec la jante une cavité pneumatique. Le pneumatique comprend en outre au moins un élément de protection localisé dans un secteur où la paroi du pneumatique entre le sommet et le bourrelet est susceptible d'être pincée entre la saillie et un obstacle externe au pneumatique en réponse à un choc violent, dû à la rencontre de la bande de roulement avec cet obstacle et qui provoque la fermeture de la cavité interne du pneumatique dans ce secteur et l'apparition momentanée de contraintes de compression élevées perpendiculairement à la paroi du pneumatique. L'élément de protection comprend une couche d'un matériau élastiquement déformable incompressible, solidaire de la gomme et des renforts de la paroi du pneumatique dans ce secteur, la couche ayant une géométrie telle que des cavités se forment en cas de pincement. C'est la formation de ces cavités entre l'élément de protection et la paroi du pneumatique avec laquelle il entre en contact en cas de pincement (ou, le cas échéant, entre deux portions de l'élément de protection, s'il entre en contact avec lui-même en cas de pincement) qui a pour effet de rendre l'ensemble compressible, malgré le fait qu'un matériau incompressible est utilisé.

On peut également réaliser l'élément de protection à l'aide d'une pièce sous forme d'une couche, d'une bande ou d'une nappe de gomme élastomère (« matériau élastomérique ») ou matériau équivalent solidaire de la gomme et/ou des renforts de la paroi du pneumatique à l'endroit où la paroi du pneumatique entre le sommet et le bourrelet est susceptible d'être pincée entre la saillie et un obstacle externe au pneumatique en réponse à un choc violent, la pièce présentant des vides ménagés dans tout ou partie de son épaisseur et espacés les uns des autres dans des directions parallèles à sa surface. La répartition de ces vides est telle que, si la pièce de gomme est pincée radialement en un point entre un obstacle et une saillie indéformable solidaire de la jante, la gomme qui se situe autour de ce point puisse fluer élastiquement et se déformer en se dilatant latéralement dans ces vides sans transmettre d'efforts de tension inadmissibles aux renforts auxquels la gomme est collée au voisinage de ce point.

Sous un troisième aspect, l'invention consiste donc en un pneumatique destiné à être monté sous pression sur une jante de roue de véhicule, laquelle présente au moins un siège circonférentiel pour l'assise d'un bourrelet du pneumatique et une saillie radiale externe au voisinage du siège, ce pneumatique comprenant :
- un sommet circonférentiel pourvu d'une bande de roulement pour assurer le contact avec le sol ;
- au moins un bourrelet présentant une portion propre à se monter sur le siège de jante ; et
- une paroi comportant une structure de gomme et de renforts reliant le sommet au bourrelet.
L'ensemble définit avec la jante une cavité pneumatique. Le pneumatique comprend en outre au moins un élément de protection localisé dans un secteur où la paroi du pneumatique entre le sommet et le bourrelet est susceptible d'être pincée entre la saillie et un obstacle externe au pneumatique en réponse à un choc violent, dû à la rencontre de la bande de roulement avec cet obstacle et qui provoque la fermeture de la cavité interne du pneumatique dans ce secteur et l'apparition momentanée de contraintes de compression élevées perpendiculairement à la paroi du pneumatique, l'élément de protection étant capable de se déformer de manière élastique dans la direction perpendiculaire à la paroi du pneumatique. L'élément de protection comprend une couche d'un matériau élastiquement déformable incompressible, solidaire de la gomme et des renforts de la paroi du pneumatique dans ce secteur, la couche présentant des vides espacés les uns des autres dans des directions parallèles à sa surface sur toute ou partie de son épaisseur.
C'est notamment la présence de cette couche qui distingue ce troisième aspect de l'invention du pneumatique divulgué dans le document WO 02/18157 qui cherche à conférer une plus grande stabilité latérale au pneumatique lorsqu'il est sous-gonflé.

Selon une forme de réalisation, une couche de gomme incompressible est percée d'ouvertures ou de trous espacés les uns des autres, dont la distribution et les dimensions transversales sont déterminées pour permettre la dilatation transversale requise en cas d'impact de compression normalement à la surface de cette pièce. Ainsi la couche peut se dilater transversalement de manière élastique dans les vides laisses libres par les ouvertures lorsqu'elle est sollicitée fortement par des contraintes de compression normales à sa surface.

Préférentiellement, les ouvertures sont disposées pour procurer un taux de vides entre 30 % et 80 % et de préférence entre 45 et 55 % dans l'épaisseur de la couche.

Selon une autre forme de réalisation la couche présente des variations d'épaisseur pour créer des zones de creux formant des vides partiels transversalement entre des zones de surépaisseurs réparties dans la couche de gomme. La répartition et les dimensions de ces surépaisseurs et des vides partiels, ou creux, qui les séparent sont déterminées pour permettre à la gomme des zones de surépaisseur de se dilater transversalement de manière élastique dans les zones d'amincissement lorsque les sommets des zones en surépaisseur sont sollicités fortement par des contraintes de compression normales à la surface de la feuille.

Préférentiellement, les zones de creux sont disposées pour procurer un taux de vides entre 30 % et 70 % et de préférence entre 45 et 55 % dans l'épaisseur de la couche comportant les surépaisseurs.

En ce qui concerne la localisation radiale de l'élément de protection, il peut être aménagé à l'intérieur de la paroi du pneumatique, au niveau d'une ou de plusieurs des zones telles que A et B, vulnérables aux chocs pincement. Il peut aussi être aménagé directement sur la face interne de la paroi du pneumatique. Dans ce cas on peut le réaliser dans tout ou partie du revêtement de gomme intérieure qui tapisse traditionnellement la paroi interne du pneumatique, notamment pour en renforcer l'étanchéité. On sait que cette gomme intérieure est souvent à base de caoutchouc butyle, matériau dont les propriétés de rigidité et d'hystérésis sont favorables à l'application prévue conformément à l'invention.

Selon un mode d'exécution de l'invention fort avantageux dans le cas où l'élément de protection comprend une couche de gomme sur la paroi interne du pneumatique, la surface de la couche de gomme présente des stries dont la densité et l'amplitude sont déterminées en fonction du module d'élasticité intrinsèque de la gomme constitutive pour procurer à la couche le module de compressibilité élastique globale recherché.

Préférentiellement, la couche de gomme s'étend à la surface interne de la paroi de flanc au moins dans une zone au voisinage de l'épaule du pneumatique et dans une zone au voisinage immédiat du bourrelet en sorte que, dans le cas d'un pincement de l'enveloppe sous l'action d'un obstacle extérieur, la surface interne de la couche vienne en contact sur elle-même en deux endroits distincts de la couche où les stries dont les sommets sont en contact se croisent dans des directions distinctes.

Selon un mode d'exécution, la couche de gomme a une épaisseur hors tout supérieure à 1,5 millimètres, et de préférence comprise entre 2,5 et 15 millimètres, la hauteur des stries étant alors sensiblement au moins égale à 1,5 millimètres.

Pour mettre en oeuvre ces dispositions dans le cas où l'élément de protection est présent dans deux zones de la paroi interne du pneumatique susceptibles d'être appliquées l'une contre l'autre à l'occasion d'un choc pincement, on doit prévoir que les stries dont les sommets entrent en contact réciproque se croisent à un angle suffisant pour éviter que les nervures de l'une de ces zones ne s'imbriquent dans les rainures de l'autre, ce qui aurait pour effet de combler temporairement les vides nécessaires à l'expansion ou au fluage de la gomme entre les nervures pour amortir les contraintes tangentielles dans la couche.

A cet égard, les stries peuvent avantageusement être organisées suivant un ou plusieurs réseaux de lignes sensiblement parallèles à une direction oblique, suivant un angle compris entre 30° et 60° par exemple et avantageusement environ 45°, par rapport à la circonférence du pneumatique. Dans ce cas en effet, si la zone d'épaule est déformée jusqu'à ce que sa paroi interne entre en contact avec la zone de bourrelet dans un choc pincement, les stries des deux zones en contact se croisent à angle approximativement droit ce qui est favorable au bon fonctionnement de l'élément de protection en amortisseur des contraintes de pincement. Lorsque les stries forment un réseau unique sur une couche de gomme qui s'étend également sur toute la paroi interne du pneumatique qui s'étend entre les zones d'épaule et de bourrelet, la géométrie torique du pneumatique est telle que la condition de croisement des stries en contact est automatiquement respectée.

Selon un mode d'exécution, les stries ont une section sensiblement triangulaire.

L'élément de protection peut être aménagé dans un secteur de la paroi du pneumatique au voisinage immédiat du bourrelet qui représente une zone particulièrement vulnérable aux effets de pincement évoqués.

L"élément de protection peut également être aménage dans un secteur de la paroi du pneumatique au voisinage de l'épaule.

On peut prévoir un élément de protection au voisinage du bourrelet et un dans la zone de l'épaule, ou l'on peut aussi réaliser un élément de protection unique qui s'étend dans la paroi de flanc du pneumatique entre l'épaule et le bourrelet.

On a déterminé qu'il était avantageux, dans les applications aux véhicules automobiles de tourisme, de mettre en oeuvre un élément de protection qui possède un module de rigidité global (mesuré à 10% de déformation) dans la direction des contraintes de « pincement » supérieur à 0,5 Méga Pascal (MPa) et de préférence au moins égal à 1 MPa.

Bien entendu, il est possible de combiner les différents aspects de l'invention pour aboutir à un élément de protection particulièrement efficace.

D'autres caractéristiques et avantages de l'invention ressortent de la description faite ci-après en référence aux dessins annexes qui montrent, à titre d'exemples non limitatifs, des formes de réalisation de l'objet de l'invention et dans lesquels:
- la figure 1 représente une vue en coupe par un plan de section radiale d'un pneumatique sur sa jante de service, dont les parois subissent un pincement par suite d'un choc frontal violent avec un obstacle tel qu'un trottoir ;
- les figures 2 à 5 sont des vues schématiques en coupe radiale d'un pneumatique monté sur jante et illustrent quatre exemples de localisation d'un élément de protection contre les chocs de pincement, selon l'invention ; la figure 6 est une vue d'une coupe schématique, perpendiculairement à sa surface, d'une couche de gomme de protection selon l'invention ;
- les figures 7a et 7b illustrent le fonctionnement d'un élément de protection selon la figure 6 lorsqu'il est sollicité lors de l'impact du pneumatique avec un obstacle extérieur ;
- la figure 8 est une vue de dessus d'un pneumatique dont la bande de roulement est en contact avec le sol ;
- les figures 9a et 9b illustrent schématiquement la disposition de stries garnissant la surface d'un élément de protection du type illustré par la figure 6 ;
- les figures 10a, 10b et 10c sont des vues en plan d'une couche de gomme utilisable comme élément de protection selon trois variantes de mises en oeuvre de l'invention ;
- la figure 11 illustre certains résultats obtenus par la mise en oeuvre de l'invention.

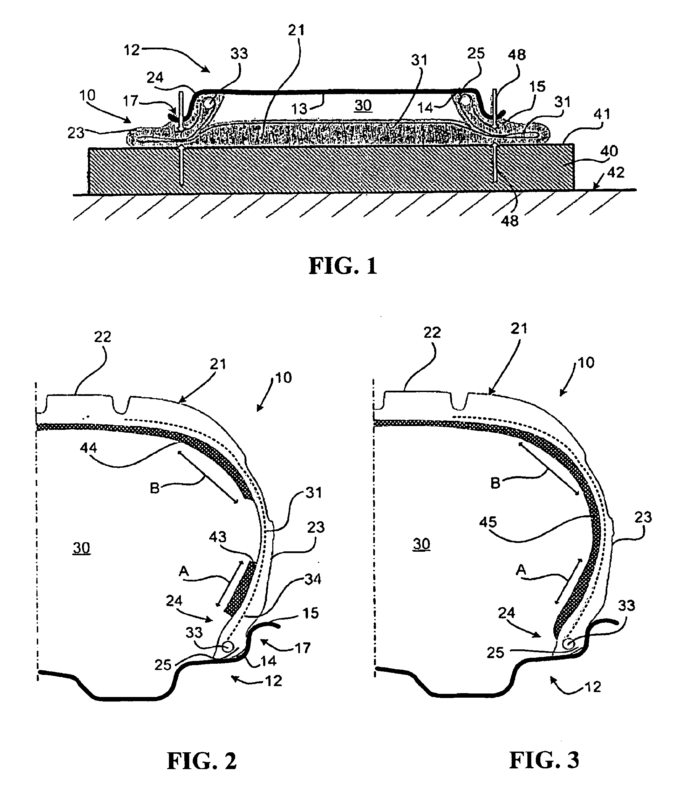

Sur les figures 2 à 5 on reconnaît la coupe d'un pneumatique 10 pris ici à titre d'exemple, monté sur une jante de roue 12. Cette dernière présente un fond de jante 13 (voir figure 1) typiquement en métal tel que de l'acier ou un alliage à base d'aluminium. Le fond de jante 13 présente vers ses extrémités axiales deux zones légèrement tronconiques formant chacune un siège de jante 14 (indiqué à la figure 2) pour recevoir les bourrelets du pneumatique 10. Dans cet exemple d'une jante traditionnelle, la partie centrale du fond de jante présente une gorge pour le montage et le démontage du pneumatique. A chaque extrémité axiale la jante est prolongée dans une direction radiale externe par un rebord formant une saillie 17 (figure 1) recourbée axialement vers l'extérieur avec un sommet 15 de rebord au point le plus éloigné de l'axe de la roue.

Le pneumatique 10 comporte de façon classique un sommet 21 présentant une bande de roulement 22 du côté radial externe. Chaque extrémité axiale du sommet 21 est reliée par une paroi de flanc 23 à un bourrelet respectif 24 présentant une face radiale interne légèrement tronconique, formant une portion de pneumatique 25 qui vient s'asseoir au montage sur son siège de jante 14 respectif. Une nappe carcasse, très schématiquement représentée en 31 sur la figure 2, s'étend à l'intérieur de la paroi du pneumatique depuis le sommet 21 jusqu'au bourrelet 24 où elle est ancrée par son extrémité correspondante. Dans l'exemple représenté cet ancrage est réalisé par l'enroulement de cette extrémité autour d'une tringle 33. L'extrémité retournée 34 de la nappe carcasse forme un brin « retour » plaqué contre le brin « aller » de la carcasse. La nappe carcasse est formée de façon très classique par la juxtaposition de fils ou câbles de renforts en acier, noyés à l'intérieur de gommes auxquelles ils adhérent fortement et alignés dans la direction radiale tout autour du pneumatique. Le pneumatique délimite, directement avec le fond de jante dans cet exemple, une chambre pneumatique 30 propre à recevoir de l'air sous une pression de gonflage de plusieurs bars pour le support, la transmission des efforts de traction et de freinage, le guidage, le confort de roulage et la protection du véhicule par amortissement des chocs d'obstacles qu'il est susceptible de rencontrer au sol.

La figure 1 illustre ce qu'il advient lorsque le pneumatique 10 sur sa jante 12 rencontre un obstacle, figure ici comme une marche de trottoir par exemple, qui se dresse au dessus du plan d'un sol 42 transversalement à la direction de roulage d'un véhicule équipé de ce pneumatique. Dans la position représentée par la figure 1, l'obstacle est heurté si violemment que la chambre pneumatique 30 s'est fermée complètement en un point de sa section radiale. L'arête 41 de cette marche vient d'être attaquée par la bande roulement 22 et le sommet du pneumatique a été repoussé avec violence contre la pression de l'air de gonflage au point que sa face interne vient buter contre la paroi interne du bourrelet du côté opposé au sommet 15 du crochet ou rebord de jante 17. En l'absence de toute possibilité de flexion radiale significative de ce rebord de jante, la paroi du pneumatique qui s'écrase sous l'effet du choc est effectivement pincée très fortement entre la saillie que constitue ce rebord de jante et la marche. Sous l'effet de l'écrasement, la paroi du pneumatique axialement distante du point de pincement est repliée sur elle-même. Ceci provoque la formation de très fortes courbures dans les câbles de renforts de la carcasse à cette extrémité repliée ainsi que dans les gommes revêtant ces renforts. Les déformations correspondantes peuvent endommager ces matériaux de façon permanente. Plus grave encore, les gommes présentes directement dans le secteur de pincement illustré par la flèche 48 sont très fortement comprimées sans avoir aucune possibilité de déformation dans cette direction. Leur nature intrinsèquement incompressible les empêche de diminuer leur épaisseur autrement qu'en se dilatant dans les directions perpendiculaires, c'est à dire tangentiellement par rapport aux parois en contact et aux fils ou câbles de renforts noyés dans la gomme. En raison de l'excellente liaison mécanique entre les gommes et les renforts constituant la structure de la paroi du pneumatique, la tendance à la déformation tangentielle des gommes est contrecarrée par la résistance des renforts à leur élongation. Lorsque les contraintes exercées sur ces renforts sont si élevées qu'elles dépassent la limite élastique de ces renforts, ceux ci entreprennent de se déformer plastiquement avant de finalement de rompre.

L'observation de la figure 1 permet de comprendre que deux zones de la paroi du pneumatique jouent un rôle particulièrement crucial dans le phénomène précédemment décrit. Il s'agit d'une première zone repérée par la flèche A sur les figures 2 à 4 et d'une zone repérée par la flèche B dans les figures 2, 3 et 5. La zone A correspond à la partie de la face interne de la paroi du pneumatique qui se trouve immédiatement au delà du bourrelet dans la direction radiale externe. La zone B correspond à la partie de la face interne de la paroi qui se trouve dans le secteur de l'épaule du pneumatique, c'est-à-dire vers la jonction entre le flanc et le sommet.

Dans l'exemple de la figure 2, les zones A et B de la face interne de la paroi 23 sont toutes deux garnies d'un revêtement de gomme tel qu'une bande circonférentielle de matériau déformable 43 et 44 pour former un élément de protection capable d'encaisser au moins en partie les efforts de pincement sans détériorer les renforts de la paroi du pneumatique.

Cette propriété peut être obtenue dans la zone A en constituant la bande de gomme 43 avec un matériau déformable dont le module élevé de rigidité en compression permet d'absorber ces efforts en se comprimant (c'est-à-dire par une diminution de volume qui ne répercute pas vers les autres directions, ou très peu, les contractions enregistrées dans la direction de la contrainte appliquée).

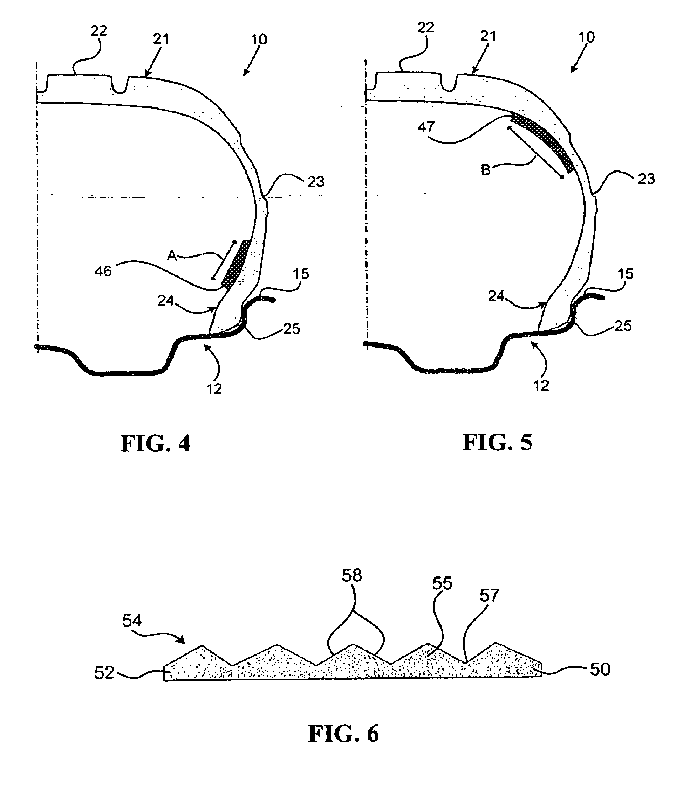

On peut également choisir de constituer la bande de protection de la zone A avec un élément déformable incompressible mais qui est conforme de manière à réagir globalement aux contraintes normales à sa surface comme un véritable matériau compressible en ne répercutant pas dans les autres directions la déformation (contraction) qu'il subit dans la direction de la contrainte de pincement. Des exemples de réalisation sont illustrés plus loin en référence aux figures 6 à 10.

Dans la réalisation de la figure 2, on a également garni la zone B avec un matériau 44 possédant, intrinsèquement ou globalement, les propriétés mentionnées à propos de la zone A. La conjonction de ces deux éléments de protection lorsqu'ils sont mis en contact sous l'effet d'un choc pincement permet d'assurer une protection efficace de la paroi du pneumatique contre ce type d'incident.

Bien entendu on peut aussi garnir la quasi-totalité de la surface interne de la paroi du pneumatique, comme représenté par la couche 45 à la figure 3, pour assurer par exemple une protection encore plus efficace du pneumatique dans le cas d'une interaction avec un obstacle non frontal ou dans des conditions différant sensiblement du cas de figure (choc frontal) illustré par la figure 1. A l'inverse, en fonction notamment de la sévérité des usages envisagés pour le pneumatique (par exemple en fonction de l'état des routes) on peut limiter l'élément de protection à une bande 46 dans la seule zone A, à proximité de la zone de bourrelet (figure 4), ou à la configuration B dans la zone d'épaule comme illustré par la figure 5 en 47, la variante illustrée par la figure 4 constituant la forme préférée d'une telle réalisation minimale.

Le cas échéant, l'élément de protection peut être formé non à la surface mais à l'intérieur de la paroi pneumatique, en réalisant un assemblage de nappes de gommes au cours de la fabrication (voire, au moins dans la zone de bourrelet, à sa surface externe).

La disposition d'un élément de protection à la surface interne de la paroi à protéger est particulièrement intéressante à divers titres, notamment lorsqu'on peut combiner sa fonction avec celle d'un revêtement déjà prévu dans certains pneumatiques traditionnels. C'est ainsi qu'on peut conformer une gomme intérieure, telle qu'utilisée classiquement pour revêtir la face interne de la paroi pneumatique, de manière à obtenir les propriétés de compressibilité globale recherchées et, au besoin, en modulant l'épaisseur de cette gomme le long de la paroi de flanc concernée selon la zone (A ou B notamment) sélectionnée.

Très généralement, cette gomme intérieure est une gomme d'étanchéité choisie pour garantir la meilleure conservation de la pression de gonflage du pneumatique. On utilise alors avantageusement du caoutchouc butyle en raison de ses propriétés d'imperméabilité à l'air. Or ce matériau présente une rigidité propre à la compression élevée ce qui permet de lui conférer la fonction de protection indiquée même dans des épaisseurs relativement faibles. Il présente aussi des propriétés d'hystérésis à la déformation qui le rendent susceptible d'offrir une capacité d'amortissement dans la transmission des efforts qui peuvent lui être appliqués dans une situation de pincement.

Un taux de compressibilité supérieur à 10 % est souhaitable dans la direction perpendiculaire à la contrainte de pincement pour réaliser l'élément de protection. On recherche, une rigidité globale de l'ensemble dans cette direction supérieure à 0,6 Méga pascals (MPa) et de préférence supérieure à 1 MPa.. Pour réaliser un élément de protection compressible possédant ces caractéristiques, on peut envisager de faire appel une mousse ultra rigide de préférence en un matériau caoutchouc. Par exemple, on peut considérer une mousse réalisée à partir d'un matériau à base caoutchoutique avec une rigidité propre supérieure à 10 MPa (et de préférence supérieure à 25 MPa) et un taux de vide entre 15 % et 60 % (et de préférence entre 25 % et 40 %). On peut aussi utiliser une couche de gomme avec des orifices, des bulles ou des billes, par exemple des billes de verre qui se cassent lors du choc.

On peut également utiliser une couche de gomme entaillée dans toute son épaisseur ou, de manière plus ou moins profonde, sur une de ses faces seulement. On décrit ci-après une variante de réalisation préférée, simple et performante, en référence à la figure 6 qui représente une coupe transversale d'une couche de gomme 50 utilisée comme élément de protection. Une face 52 de la couche 50 est normalement liée à la paroi interne du pneumatique, non représentée ici. Son autre face 54 est garnie de stries 55 parallèles à une direction transversale par rapport au plan de la figure 6. Les stries 55 ont ici un profil triangulaire de telle sorte que les sommets 56 de deux stries adjacentes sont séparés par une vallée 57 aux versants 58 inclinés par rapport au plan général de la couche 50. Dans cet exemple la couche 50 est réalisée dans un élastomère de 1 MPa de module ; l'épaisseur hors tout de la couche de gomme 50 est de 3 millimètres ; la hauteur des vallées dans le sens perpendiculaire au plan de la couche est d'environ 2 mm ; le pas de reproduction des stries est de 5 millimètres ; le profil des stries est symétrique, ce qui donne un taux de vides de 50 % dans l'épaisseur striée de la couche 50. En pratique on peut utiliser une couche de gomme d'épaisseur totale supérieure à 1,5 mm et de préférence comprise entre 2,5 et 15 millimètres, la hauteur des stries étant alors au moins égale à 1,5 millimètres. Le taux de vides peut se situer entre 30 % et 70 % et de préférence entre 45 et 55 %.

La couche de gomme 50 peut être disposée à la surface interne de la paroi du pneumatique, soit selon une bande dans la zone A et/ou une bande dans la zone B, soit en une seule nappe couvrant outre ces deux zones toute la partie intermédiaire du flanc interne du pneumatique. Elle peut être réalisée par une conformation appropriée de certaines zones d'une gomme d'étanchéité tapissant la paroi interne du pneumatique.

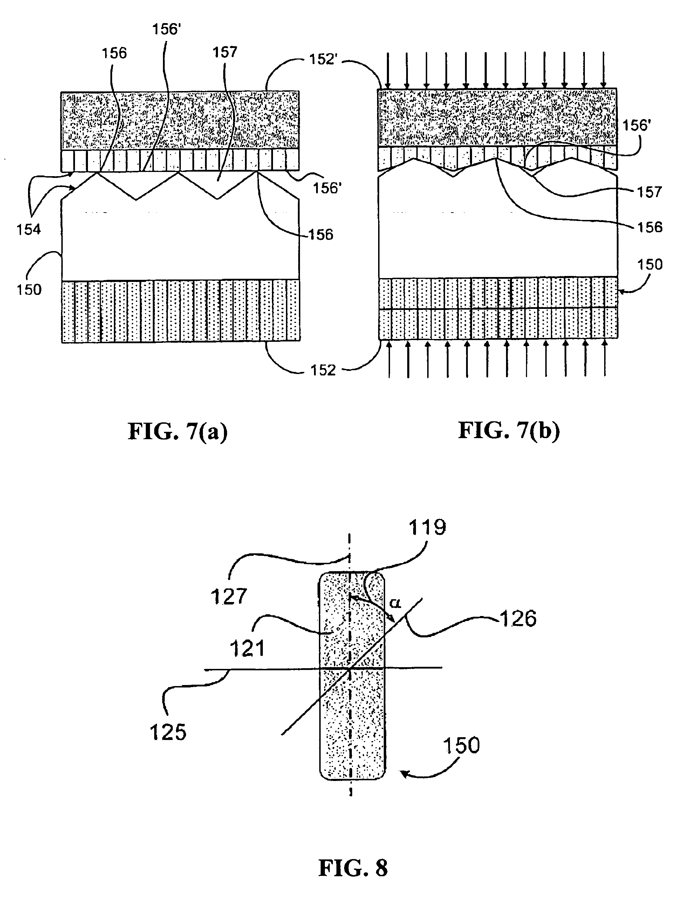

Les stries peuvent adopter diverses orientations y compris un parcours non nécessairement rectiligne, telles que vues dans un plan développé de la portion de surface torique dans laquelle elles sont aménagées. On préfère cependant adopter une orientation qui n'est ni radiale ni circonférentielle, selon un angle avec la direction d'une ligne radiale sur la face interne de la paroi du pneumatique, compris entre 30 et 60° et de préférence égale à 45°, pour les raisons exposées ci-après. Ainsi, si l'on projette le sommet 121 d'un pneumatique 110 dans un plan parallèle à l'axe 125 du pneumatique et au sol de roulement, comme représenté par la figure 8, les stries partent du sommet dans une direction oblique 126 faisant un angle 119 avec un plan équatorial 127 perpendiculaire à l'axe 125 du pneumatique. Elles croisent obliquement les méridiens circonférentiels dans les flancs du pneumatique.

Si l'on considère les zones A et B susceptibles d'entrer en contact réciproque lors d'un choc pincement, il est important pour le bon fonctionnement de l'élément de protection que les stries présentes dans ces deux zones ne s'imbriquent pas l'une dans l'autre au moment où elles atteignent la position illustrée par la figure 1, de façon à laisser à la gomme des sommets des stries la faculté de se déformer latéralement dans les vallées lorsque les arêtes des sommets sont comprimées violemment en cas de choc pincement.

A cet égard, les figures 7a et 7b illustrent le fonctionnement d'une zone striée conformément à l'invention. Sur la figure 7a une éprouvette de gomme 150 présentant une surface garnie de stries 154 entre en contact avec une autre éprouvette 150' dont la surface de contact 153 est elle-même garnie de stries identiques orientées parallèlement au plan de la figure 7a. On observe que les arêtes des sommets 156 des stries 154 sont juste en contact avec les arêtes telles que 156' des sommets des stries affleurant à la surface 153' de l'éprouvette 150'. Le contact entre les deux éprouvettes est donc constitué par un réseau de points d'appui aux croisements des stries respectives. La figure 7b représente les deux éprouvettes 150 et 150' lorsque leurs surfaces précédemment en contact dans la figure 7a sont appliquées avec force l'une contre l'autre, par exemple par suite d'un impact de compression sur leurs faces non en contact 152 et 152'. Les pointes de sommets en contact s'affaissent sous l'effet de contraintes de compression quasi-instantanée de l'ordre de 10 bars engendrées par le choc. On voit que la gomme des sommets de l'éprouvette 150 se dilate latéralement en comblant partiellement les vallées 157. L'éprouvette 150' est sollicitée de la même manière. L'arête du sommet 156' de cette éprouvette, visible sur les figures 7a et 7b, se déforme aux points de contact avec les sommets 156 des stries de l'éprouvette 150. L'épaisseur totale des éprouvettes diminue tandis que la gomme sollicitée se déforme en comblant les vallées séparant les sommets des stries.

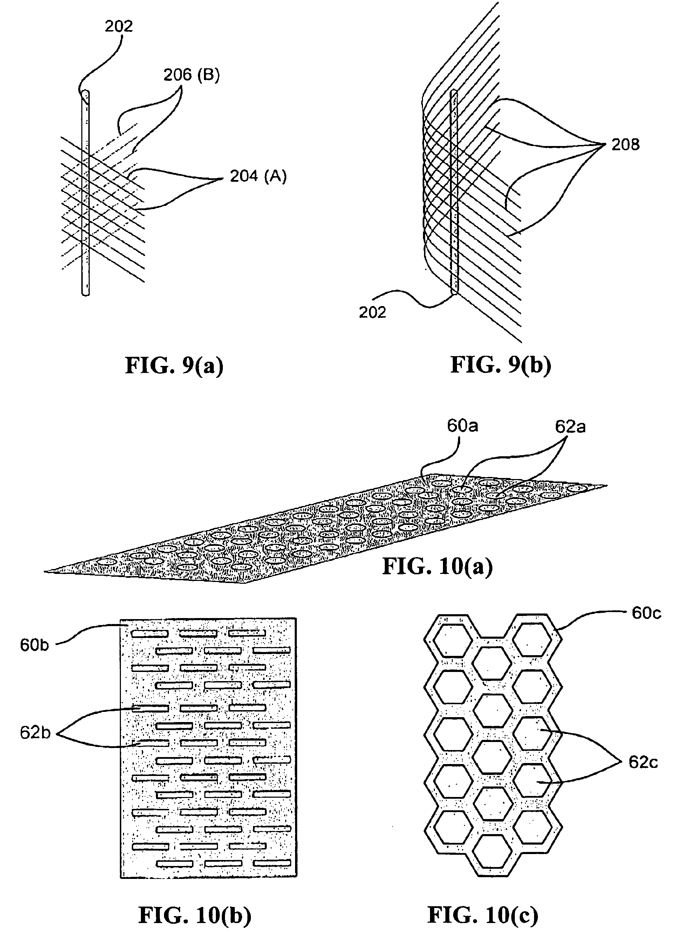

La figure 9a montre schématiquement l'orientation des stries de deux couches de protection garnissant respectivement la zone A et la zone B à l'intérieur de la paroi du pneumatique, lorsqu'elles entrent en contact par suite d'un choc externe provoquant l'écrasement du pneumatique. En 202 on a représenté la trace du rebord de jante vu en projection sur un plan parallèle à l'axe du pneumatique. Des lignes parallèles illustrent en 204 les stries d'une couche gomme de protection selon l'invention garnissant la zone A à proximité du bourrelet, d'une part et en 206 les stries d'une couche de protection garnissant la zone B sous l'épaule, d'autre part. On note que l'orientation des stries dans les zones A et B est telle que ces lignes se croisent entre elles et avec la direction du rebord de jante lorsqu'elles sont amenées en contact réciproque par l'effet d'un choc externe. Une orientation à 45° en sens opposés pour les stries 204 et 206 est favorable. En pratique comme exposé plus haut on sélectionne de préférence l'angle de ces stries avec la direction radiale dans le flanc du pneumatique entre 30° et 60° d'angle en valeur absolue.

La figure 9b illustre schématiquement de la même façon que la figure 9a le cas où la couche de gomme de protection garnissant le flanc interne du pneumatique est unitaire et striée de façon continue dans une direction d'environ 45° par rapport à la direction circonférentielle . On note alors que, du fait de la géométrie particulière du pneumatique, les stries 208 de la couche de protection en contact dans les deux zones A et B lors d'un choc pincement se croisent naturellement dans des directions sensiblement orthogonales entre elles.

Les figures 10 a, 10b et 10c illustrent d'autres modes de réalisation d'une couche de gomme pour réaliser un élément de protection selon l'invention possédant une rigidité radiale en compression globale très élevée pour « encaisser » les chocs pincement sans endommager le pneumatique. La compressibilité globale de la couche de gomme dans le sens de son épaisseur est augmentée et réglée par l'aménagement d'ouvertures convenablement distribuées. Comme représenté à la figure 10a, on peut donner à ces ouvertures une forme de puits circulaires 62a dans une couche de gomme 60a. L'épaisseur de la couche de gomme tapissant les zones A et B est supérieure à 1,5 millimètres et de préférence choisie entre 2,5 et 15 millimètres. On peut également utiliser une couche de gomme 60b percée d'ouvertures en forme de lamelles 62b ou autres alvéoles allongées (figure 10b), ou de nids d'abeille 62c dans une couche 60c (figure 10c). En pratique un taux de vide de 50 % dans le plan de la couche de gomme est favorable. Il est de préférence choisi entre 45 et 55 % et n'est pas normalement inférieur à 30%, pouvant être augmenté jusqu'à 80 % dans certaines configurations par exemple dans le cas d'ouvertures en nid d'abeille de la figure 10c. Il est alors judicieux de prévoir des ouvertures de dimensions transversales petites par exemple de l'ordre de 10 millimètres.

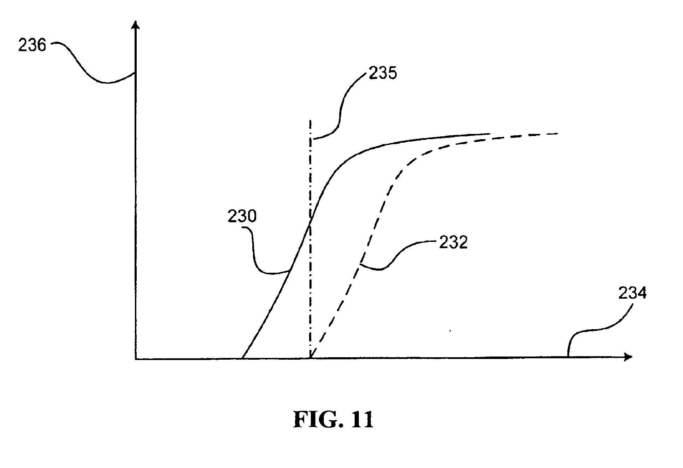

Des essais conduits avec des éléments de protection à couche striée selon les principes qui viennent d'être indiques ont permis de noter une diminution sensible du nombre de renforts casses dans le cas d'une paroi pneumatique subissant des chocs pincements dans des conditions plus ou moins violentes. La courbe de référence 230 illustre la variation du nombre de renforts casses (sur l'axe des ordonnées 236) dans un pneumatique traditionnel heurtant un obstacle de référence à des vitesses croissantes entre 30 à 50 km/h (axe des abscisses 234). Sur le même diagramme la courbe 232 montre un important décalage de la zone dans laquelle des dommages peuvent être subis. Ce décalage permet un gain important avant l'apparition des premiers phénomènes de rupture. Par exemple, la figure 11 présente une zone avec initialement un taux de 20 ruptures, ramené à un taux nul, comme visible à l'abscisse 235.

Une méthode de fabrication de couches de protection striées à la surface interne du pneumatique consiste à fabriquer une ébauche crue selon les techniques traditionnelles avec un dimensionnement en épaisseur approprié de la gomme intérieure, puis à utiliser pour la vulcanisation de cette ébauche un organe de contre-moulage, tel qu'un noyau ou une membrane de cuisson, adapté à comprimer la paroi interne de la cavité pneumatique dont l'autre face est appliquée dans un moule de bande de roulement. On connaît déjà l'utilisation de membranes de cuisson comportant des nervures réparties à leur surface pour créer des canaux d'évacuation de gaz à la surface interne du pneumatique en cours de cuisson. Ces nervures ne sont pas appropriées à la réalisation de stries conformes à l'invention car elles sont trop petites et trop espacées pour exercer un effet significatif. Dans le cas de la présente invention on prévoit d'utiliser des membranes de cuisson pourvues d'un réseau de nervures correspondant aux stries à réaliser dans la gomme intérieure de l'ébauche. On obtient ainsi d'une façon particulièrement simple un aménagement de stries correspondant à l'invention moyennant des changements relativement minimes de l'outil de fabrication.

Bien entendu, l'invention n'est pas limitée aux exemples décrits et représentés. Diverses modifications peuvent y être apportées sans sortir de son cadre tel que défini, notamment, par les revendications annexées.

## Revendications

1. Pneumatique (10) destiné à être monté sous pression sur une jante de roue (12) de véhicule, laquelle présente au moins un siège (14) circonférentiel pour l'assise d'un bourrelet (24) du pneumatique et une saillie radiale (17) externe au voisinage du siège (14), ce pneumatique comprenant :
- un sommet circonférentiel (21) pourvu d'une bande de roulement (22) pour assurer le contact avec le sol ;
- au moins un bourrelet (24) présentant une portion (25) propre à se monter sur le siège (14) de jante (12) ; et
- une paroi comportant une structure de gomme et de renforts reliant le sommet (21) au bourrelet (24),
l'ensemble définissant avec la jante (12) une cavité pneumatique (30), le pneumatique comprenant en outre :
- au moins un élément de protection (43-47) localisé dans un secteur (A, B) où la paroi du pneumatique entre le sommet (21) et le bourrelet (24) est susceptible d'être pincée entre la saillie (17) et un obstacle externe au pneumatique en réponse à un choc violent, dû à la rencontre de la bande de roulement (22) avec cet obstacle et qui provoque la fermeture de la cavité interne (30) du pneumatique dans ce secteur et l'apparition momentanée de contraintes de compression élevées perpendiculairement à la paroi du pneumatique, l'élément de protection (43-47) étant capable de se déformer de manière élastique dans la direction perpendiculaire à la paroi du pneumatique,
le pneumatique étant **caractérisé en ce que** l'élément de protection (43-47) est réalisé à l'aide d'une mousse en matériau à base caoutchoutique avec une rigidité supérieure à 10 MPa (et de préférence supérieure à 25 MPa) et un taux de vide entre 15% et 60 % (et de préférence entre 25 % et 40 %).

2. Pneumatique (10) destiné à être monté sous pression sur une jante de roue (12) de véhicule, laquelle présente au moins un siège (14) circonférentiel pour l'assise d'un bourrelet (24) du pneumatique et une saillie radiale (17) externe au voisinage du siège (14), ce pneumatique comprenant :
- un sommet circonférentiel (21) pourvu d'une bande de roulement (22) pour assurer le contact avec le sol ;
- au moins un bourrelet (24) présentant une portion (25) propre à se monter sur le siège (14) de jante (12) ; et
- une paroi comportant une structure de gomme et de renforts reliant le sommet (21) au bourrelet (24),
l'ensemble définissant avec la jante (12) une cavité pneumatique (30), le pneumatique comprenant en outre :
- au moins un élément de protection (43-47) localisé dans un secteur où la paroi du pneumatique entre le sommet (21) et le bourrelet (24) est susceptible d'être pincée entre la saillie (17) et un obstacle externe au pneumatique en réponse à un choc violent, dû à la rencontre de la bande de roulement (22) avec cet obstacle et qui provoque la fermeture de la cavité interne (30) du pneumatique dans ce secteur et l'apparition momentanée de contraintes de compression élevées perpendiculairement à la paroi du pneumatique, l'élément de protection (43-47) étant capable de se déformer de manière élastique dans la direction perpendiculaire à la paroi du pneumatique,
le pneumatique étant **caractérisé en ce que** l'élément de protection (43-47) comprend une couche (50) d'un matériau élastiquement déformable incompressible, solidaire de la gomme et des renforts de la paroi du pneumatique dans ce secteur, la couche (50) ayant une géométrie telle que des cavités se forment en cas de pincement.

3. Pneumatique (10) destiné à être monté sous pression sur une jante de roue (12) de véhicule, laquelle présente au moins un siège (14) circonférentiel pour l'assise d'un bourrelet (24) du pneumatique et une saillie (17) radiale externe au voisinage du siège (14), ce pneumatique comprenant :
- un sommet circonférentiel (21) pourvu d'une bande de roulement (22) pour assurer le contact avec le sol ;
- au moins un bourrelet (24) présentant une portion (25) propre à se monter sur le siège (14) de jante (12) ; et
- une paroi comportant une structure de gomme et de renforts reliant le sommet (21) au bourrelet (24),
l'ensemble définissant avec la jante (12) une cavité pneumatique (30), le pneumatique comprenant en outre :
- au moins un élément de protection (43-47) localisé dans un secteur où la paroi du pneumatique entre le sommet (21) et le bourrelet (24) est susceptible d'être pincée entre la saillie (17) et un obstacle externe au pneumatique en réponse à un choc violent, dû à la rencontre de la bande de roulement (22) avec cet obstacle et qui provoque la fermeture de la cavité interne (30) du pneumatique dans ce secteur et l'apparition momentanée de contraintes de compression élevées perpendiculairement à la paroi du pneumatique, l'élément de protection (43-47) étant capable de se déformer de manière élastique dans la direction perpendiculaire à la paroi du pneumatique,
le pneumatique étant **caractérisé en ce que** l'élément de protection comprend une couche (60a, 60b, 60c) d'un matériau élastiquement déformable incompressible, solidaire de la gomme et des renforts de la paroi du pneumatique dans ce secteur, la couche (60a, 60b, 60c) présentant des vides (62a, 62b, 62c) espacés les uns des autres dans des directions parallèles à sa surface sur toute ou partie de son épaisseur.

4. Pneumatique (10) selon la revendication 3, dans lequel la couche (60a, 60b, 60c) est percée d'ouvertures (62a, 62b, 62c) espacées les unes des autres dont la distribution et les dimensions transversales sont déterminées pour permettre au matériau de cette couche (60a, 60b, 60c) de se dilater transversalement de manière élastique dans les vides laisses libres par ces ouvertures (62a, 62b, 62c) lorsqu'elle est sollicitée fortement par des contraintes de compression normales à sa surface.

5. Pneumatique (10) selon la revendication 4, dans lequel les ouvertures (62a, 62b, 62c) sont disposées pour procurer un taux de vides entre 30 % et 80 % dans l'épaisseur de la couche (60a, 60b, 60c).

6. Pneumatique (10) selon l'une quelconque des revendications 2 ou 3, dans lequel la couche (50 ; 60a, 60b, 60c) présente des variations d'épaisseur pour créer des zones de creux entre des zones de surépaisseur dans la couche de gomme dont la répartition et les dimensions sont déterminées pour permettre à la gomme des zones de surépaisseur de se dilater transversalement de manière élastique dans les zones de creux lorsque les sommets des zones de surépaisseur sont sollicités fortement par des contraintes de compression normales à la couche.

7. Pneumatique (10) selon la revendication 6, dans lequel les zones de creux sont disposées pour procurer un taux de vides entre 30 % et 70 % dans l'épaisseur de la couche comportant les surépaisseurs.

8. Pneumatique (10) selon l'une des revendications 2 à 7, dans lequel la couche (50 ; 60a, 60b, 60c) est un revêtement de gomme localisé sur la face interne de la paroi du pneumatique.

9. Pneumatique (10) selon l'une des revendications 2 à 8, dans lequel la couche (50 ; 60a, 60b, 60c) est formée par au moins un secteur d'une gomme d'étanchéité sur la face interne de la paroi du pneumatique.

10. Pneumatique (10) selon la revendication 9, dans lequel la gomme intérieure d'étanchéité sur la face interne de la paroi du pneumatique est à base de caoutchouc butyle.

11. Pneumatique (10) selon la revendication 6 ou 7 et l'une des revendications 8 à 10, dans lequel la surface de la couche de gomme (50 ; 60a, 60b, 60c) présente des stries (55) sensiblement parallèles dont la densité et l'amplitude sont sélectionnées en fonction du module d'élasticité intrinsèque de la gomme constitutive pour procurer à la couche (50 ; 60a, 60b, 60c) le module de rigidité globale en compression recherché.

12. Pneumatique (10) selon la revendication 11, dans lequel la couche de gomme (50 ; 60a, 60b, 60c) s'étend à la surface interne de la paroi de flanc au moins dans une zone au voisinage de l'épaule du pneumatique et dans une zone au voisinage immédiat du bourrelet (24) en sorte que, dans le cas d'un pincement de l'enveloppe sous l'action d'un obstacle extérieur, la surface interne de la couche (50 ; 60a, 60b, 60c) vienne en contact sur elle-même en deux endroits distincts de la couche où les stries (55) dont les sommets sont en contact se croisent dans des directions distinctes.

13. Pneumatique (10) selon la revendication 11, dans lequel la couche de gomme (50 ; 60a, 60b, 60c) a une épaisseur hors tout supérieure à 1,5 millimètres, la hauteur des stries (55) étant alors sensiblement au moins égale à 1,5 millimètres.

14. Pneumatique (10) selon l'une des revendications 11 à 13, dans lequel les stries (55) ont une section sensiblement triangulaire.

15. Pneumatique (10) selon l'une quelconque des revendications 1 à 14, dans lequel l'élément de protection (43-47) possède un module de rigidité global dans la direction des contraintes de « pincement » supérieur à 0,5 MPa.

16. Pneumatique (10) selon l'une quelconque des revendications 1 à 15, dans lequel l'élément de protection (43-47) est aménagé dans un secteur de la paroi du pneumatique au voisinage immédiat du bourrelet (24).

17. Pneumatique (10) selon l'une quelconque des revendications 1 à 16, dans lequel l'élément de protection (43-47) est aménagé dans un secteur de la paroi du pneumatique au voisinage de l'épaule.

18. Pneumatique (10) selon les revendications 16 et 17 combinées, dans lequel l'élément de protection (43-47) s'étend sensiblement dans toute la portion de la paroi du pneumatique entre l'épaule et le bourrelet (24).

19. Pneumatique (10) selon l'une quelconque des revendications 16 à 18, dans lequel l'élément de protection (43-47) est disposé à la surface interne de la paroi du pneumatique.

## Claims

1. Tyre (10) designed to be mounted and pressurized on a vehicle wheel rim (12) that has at least one circumferential seat (14) for a bead (24) belonging to the tyre and an outward radial projection (17) in the vicinity of the seat (14), this tyre comprising:
• a circumferential crown (21) provided with a tread (22) for ensuring contact with the ground;
• at least one bead (24) having a portion (25) suitable for being mounted on the rim (12) seat (14); and
• a wall comprising a structure of rubber and reinforcements connecting the crown (21) to the bead (24);
the whole formed by these elements defining with the rim (12) an air chamber (30), the tyre also comprising:
• at least one protective element (43-47) located in a sector (A,B) where the tyre wall between the crown (21) and the bead (24) could become pinched between the projection (17) and an obstacle external to the tyre in response to a violent impact due to the tread (22) meeting this obstacle, causing closure of the internal cavity (30) of the tyre in this sector and momentary high compressive stresses perpendicular to the wall of the tyre, the protective element (43-47) being capable of deforming elastically in the direction perpendicular to the tyre wall,
the tyre being **characterized in that** the protective element (43-47) is produced using a foam of a rubber-based material with a rigidity greater than 10 MPa (and preferably greater than 25 MPa) and a void ratio of between 15% and 60% (and preferably of between 25% and 40%).

2. Tyre (10) designed to be mounted and pressurized on a vehicle wheel rim (12) that has at least one circumferential seat (14) for a bead (24) belonging to the tyre and an outward radial projection (17) in the vicinity of the seat (14), this tyre comprising:
• a circumferential crown (21) provided with a tread (22) for ensuring contact with the ground;
• at least one bead (24) having a portion (25) suitable for being mounted on the rim (12) seat (14); and
• a wall comprising a structure of rubber and reinforcements connecting the crown (21) to the bead (24);
the whole formed by these elements defining with the rim (12) an air chamber (30), the tyre also comprising:
• at least one protective element (43-47) located in a sector (A,B) where the tyre wall between the crown (21) and the bead (24) could become pinched between the projection (17) and an obstacle external to the tyre in response to a violent impact due to the tread (22) meeting this obstacle, causing closure of the internal cavity (30) of the tyre in this sector and momentary high compressive stresses perpendicular to the wall of the tyre, the protective element (43-47) being capable of deforming elastically in the direction perpendicular to the tyre wall,
the tyre being **characterized in that** the protective element (43-47) comprises a layer (50) of an incompressible elastically deformable material fixed to the rubber and to the reinforcements of the tyre wall in this sector, the layer (50) having a geometry such that cavities form when it is pinched.

3. Tyre (10) designed to be mounted and pressurized on a vehicle wheel rim (12) that has at least one circumferential seat (14) for a bead (24) belonging to the tyre and an outward radial projection (17) in the vicinity of the seat (14), this tyre comprising:
• a circumferential crown (21) provided with a tread (22) for ensuring contact with the ground;
• at least one bead (24) having a portion (25) suitable for being mounted on the rim (12) seat (14); and
• a wall comprising a structure of rubber and reinforcements connecting the crown (21) to the bead (24);
the whole formed by these elements defining with the rim (12) an air chamber (30), the tyre also comprising:
• at least one protective element (43-47) located in a sector where the tyre wall between the crown (21) and the bead (24) could become pinched between the projection (17) and an obstacle external to the tyre in response to a violent impact due to the tread (22) meeting this obstacle, causing closure of the internal cavity (30) of the tyre in this sector and momentary high compressive stresses perpendicular to the wall of the tyre, the protective element (43-47) being capable of deforming elastically in the direction perpendicular to the tyre wall,
the tyre being **characterized in that** the protective element comprises a layer (60a, 60b, 60c) of an incompressible elastically deformable material fixed to the rubber and to the reinforcements of the tyre wall in this sector, the layer (60a, 60b, 60c) having voids (62a, 62b, 62c) which are spaced apart from each other in directions parallel to its surface through its full thickness or through part of its thickness.

4. Tyre (10) according to Claim 3, in which the layer (60a, 60b, 60c) is pierced by openings (62a, 62b, 62c) spaced apart from each other, whose distribution and transverse dimensions are such as to allow the material of this layer (60a, 60b, 60c) to expand transversely elastically into the voids (62a, 62b, 62c) left by these openings (62a, 62b, 62c) when it is heavily stressed by compressive stresses normal to its surface.

5. Tyre (10) according to Claim 4, in which the openings (62a, 62b, 62c) are arranged to give a void ratio of between 30% and 80% in the thickness of the layer (60a, 60b, 60c).

6. Tyre (10) according to either of Claims 2 and 3, in which the layer (50; 60a, 60b, 60c) has thickness variations to create indented areas between raised areas in the rubber layer, the distribution and dimensions of which are such as to allow the rubber of the raised areas to expand transversely elastically into the indented areas when the peaks of the raised areas are heavily stressed by compressive stresses normal to the layer.

7. Tyre (10) according to Claim 6, in which the indented areas are arranged to provide a void ratio of between 30% and 70% in the thickness of the layer comprising the raised areas.

8. Tyre (10) according to one of Claims 2 to 7, in which the layer (50; 60a, 60b, 60c) is a rubber coating located on the inside face of the tyre wall.

9. Tyre (10) according to one of Claims 2 to 8, in which the layer (50; 60a, 60b, 60c) is formed by at least one sector (A,B) of a sealing rubber on the inside face of the tyre wall.

10. Tyre (10) according to Claim 9, in which the inner sealing rubber on the inside face of the tyre wall is based on butyl rubber.

11. Tyre (10) according to Claim 6 or 7 and one of Claims 8 to 10, in which the surface of the rubber layer (50; 60a, 60b, 60c) has roughly parallel striations (55) whose density and amplitude are selected on the basis of the intrinsic elastic modulus of the constituent rubber to give the layer (50; 60a, 60b, 60c) the desired overall modulus of rigidity in compression.

12. Tyre (10) according to Claim 11, in which the rubber layer (50; 60a, 60b, 60c) extends on the inside surface of the sidewall, at least in an area in the vicinity of the tyre shoulder and in an area in the immediate vicinity of the bead (24) so that, in the event of the envelope being pinched by the action of an external obstacle, the inside surface of the layer (50; 60a, 60b, 60c) makes contact with itself at two separate locations of the layer where the striations (55) whose peaks are in contact lie across each other in different directions.

13. Tyre (10) according to Claim 11, in which the rubber layer (50; 60a, 60b, 60c) has an overall thickness of more than 1.5 millimetres, the height of the striations (55) then being approximately 1.5 millimetres or more.

14. Tyre (10) according to one of Claims 11 to 13, in which the striations (55) are essentially triangular in cross section.

15. Tyre (10) according to any one of Claims 1 to 14, in which the protective element (43-47) has an overall modulus of rigidity in the direction of the "pinching" stresses of greater than 0.5 MPa.

16. Tyre (10) according to any one of Claims 1 to 15, in which the protective element (43-47) is positioned in a sector (A,B) of the tyre wall in the immediate vicinity of the bead (24).

17. Tyre (10) according to any one of Claims 1 to 16, in which the protective element (43-47) is positioned in a sector of the tyre wall in the vicinity of the shoulder.

18. Tyre (10) according to Claims 16 and 17, combined, in which the protective element (43-47) extends over essentially the whole portion of the tyre wall between the shoulder and the bead (24).

19. Tyre (10) according to any one of Claims 16 to 18, in which the protective element (43-47) is arranged on the inside surface of the tyre wall.

## Patentansprüche

1. Luftreifen (10), der dazu bestimmt ist, unter Druck auf eine Radfelge (12) eines Fahrzeugs montiert zu werden, die wenigstens einen Umfangssitz (14) für den Sitz eines Wulstes (24) des Luftreifens und einen äußeren radialen Vorsprung (17) in der Nähe des Sitzes (14) aufweist, wobei dieser Luftreifen Folgendes umfasst:
- eine Umfangsoberseite (21), die mit einer Laufbahn (22) versehen ist, um den Kontakt mit dem Boden zu gewährleisten;
- wenigstens einen Wulst (24), der einen Abschnitt (25) aufweist, der dazu geeignet ist, am Sitz (14) der Felge (12) montiert zu werden; und
- eine Wand, die eine Struktur aus Gummi und aus Verstärkungen aufweist, die die Oberseite (21) mit dem Wulst (24) verbindet,
wobei die Gesamtheit mit der Felge (12) einen Luftreifenhohlraum (30) definiert, wobei der Luftreifen außerdem Folgendes umfasst:
- wenigstens ein Schutzelement (43-47), das sich in einem Sektor (A, B) befindet, in dem die Wand des Luftreifens zwischen der Oberseite (21) und dem Wulst (24) zwischen dem Vorsprung (17) und einem Hindernis außerhalb des Luftreifens in Reaktion auf einen kräftigen Stoß, der durch das Auftreffen der Laufbahn (22) auf dieses Hindernis verursacht wird, gequetscht werden kann, und das das Verschließen des internen Hohlraums (30) des Luftreifens in diesem Sektor und das sofortige Auftreten von hohen Kompressionsbeanspruchungen senkrecht zur Wand des Luftreifens hervorruft, wobei sich das Schutzelement (43-47) in der Richtung senkrecht zu der Wand des Luftreifens elastisch verformen kann,
wobei der Luftreifen **dadurch gekennzeichnet ist, dass** das Schutzelement (43-47) mit Hilfe eines Schaumstoffs aus einem Material auf Kautschukbasis hergestellt ist, das eine Steifigkeit größer als 10 MPa (und vorzugsweise größer als 25 MPa) und einen Lückengrad im Bereich von 15% bis 60% (und vorzugsweise von 25% bis 40 %) hat.

2. Luftreifen (10), der dazu bestimmt ist, unter Druck auf eine Radfelge (12) eines Fahrzeugs montiert zu werden, die wenigstens einen Umfangssitz (14) für den Sitz eines Wulstes (24) des Luftreifens und einen äußeren radialen Vorsprung (17) in der Umgebung des Sitzes (14) aufweist, wobei dieser Luftreifen Folgendes umfasst:
- eine Umfangsoberseite (21), die mit einer Laufbahn (22) versehen ist, um den Kontakt mit dem Boden zu gewährleisten;
- wenigstens einen Wulst (24), der einen Abschnitt (25) aufweist, der am Sitz (14) der Felge (12) montiert werden kann; und
- eine Wand, die eine Struktur aus Gummi und Verstärkungen enthält und die Oberseite (21) mit dem Wulst (24) verbindet,
wobei die Gesamtheit mit der Felge (12) einen Luftreifenhohlraum (30) definiert, wobei der Luftreifen außerdem Folgendes umfasst:
- wenigstens ein Schutzelement (43-47), das sich in einem Sektor befindet, in dem die Wand des Luftreifens zwischen der Oberseite (21) und dem Wulst (24) zwischen dem Vorsprung (17) und einem Hindernis außerhalb des Luftreifens in Reaktion auf einen kräftigen Stoß, der durch das Auftreffen der Laufbahn (22) auf das Hindernis hervorgerufen wird, gequetscht werden kann, und das das Schließen des internen Hohlraums (30) des Luftreifens in diesem Sektor und das sofortige Auftreten von hohen Kompressionsbeanspruchungen senkrecht zu der Wand des Luftreifens hervorruft, wobei sich das Schutzelement (43-47) in der Richtung senkrecht zu der Wand des Luftreifens elastisch verformen kann,
wobei der Luftreifen **dadurch gekennzeichnet ist, dass** das Schutzelement (43-47) eine Schicht (50) aus einem nicht komprimierbaren, elastisch verformbaren Material enthält, die mit dem Gummi und den Verstärkungen der Wand des Luftreifens in diesem Sektor fest verbunden ist, wobei die Schicht (50) eine Geometrie besitzt, derart, dass sich im Fall eines Quetschens Hohlräume bilden.

3. Luftreifen (10), der dazu bestimmt ist, unter Druck auf eine Radfelge (12) eines Fahrzeugs montiert zu werden, die wenigstens einen Umfangssitz (14) für den Sitz eines Wulstes (24) des Luftreifens und einen äußeren radialen Vorsprung (17) in die Umgebung des Sitzes (14) aufweist, wobei dieser Luftreifen Folgendes umfasst:
- eine Umfangsoberseite (21), die mit einer Laufbahn (22) versehen ist, um den Kontakt mit dem Boden zu gewährleisten;
- wenigstens einen Wulst (24), der einen Abschnitt (25) aufweist, der am Sitz (14) der Felge (12) montiert werden kann; und
- eine Wand, die eine Struktur aus Gummi und Verstärkungen aufweist und die Oberseite (21) mit dem Wulst (24) verbindet,
wobei die Gesamtheit mit der Felge (12) einen Luftreifenhohlraum (30) definiert, wobei der Luftreifen außerdem Folgendes umfasst:
- wenigstens ein Schutzelement (43-47), das sich in einem Sektor befindet, in dem die Wand des Luftreifens zwischen der Oberseite (21) und dem Wulst (24) zwischen dem Vorsprung (17) und dem Hindernis außerhalb des Luftreifens in Reaktion auf einen kräftigen Stoß, der durch das Auftreffen der Laufbahn (22) auf dieses Hindernis hervorgerufen wird, gequetscht werden kann, und das das Schließen des internen Hohlraums (30) des Luftreifens in diesem Abschnitt und das sofortige Auftreten von hohen Kompressionsbeanspruchungen senkrecht zu der Wand des Luftreifens hervorruft, wobei sich das Schutzelement (43-47) in der Richtung senkrecht zu der Wand des Luftreifens elastisch verformen kann,
wobei der Luftreifen **dadurch gekennzeichnet ist, dass** das Schutzelement eine Schicht (60a, 60b, 60c) aus einem nicht komprimierbaren elastisch verformbaren Material aufweist, die mit dem Gummi und den Verstärkungen der Wand des Luftreifens in diesem Sektor fest verbunden ist, wobei die Schicht (60a, 60b, 60c) über ihre gesamte Dicke oder einen Teil hiervon Hohlräume (62a, 62b, 62c), die in Richtungen parallel zu ihrer Oberfläche voneinander beabstandet sind, aufweist.

4. Luftreifen (10) nach Anspruch 3, wobei die Schicht (60a, 60b, 60c) von Öffnungen (62a, 62b, 62c) durchsetzt ist, die voneinander beabstandet sind und deren Verteilung und deren transversale Abmessungen bestimmt sind, um dem Material dieser Schicht (60a, 60b, 60c) zu ermöglichen, sich transversal elastisch in die Hohlräume, die von diesen Öffnungen (62a, 62b, 62c) freigelassen werden, auszudehnen, wenn sie durch die Kompressionsbeanspruchungen senkrecht zu ihrer Oberfläche stark zusammengepresst wird.

5. Luftreifen (10) nach Anspruch 4, wobei die Öffnungen (62a, 62b, 62c) angeordnet sind, um einen Lückengrad im Bereich von 30% bis 80% in der Dicke der Schicht (60a, 60b, 60c) zu schaffen.

6. Luftreifen (10) nach einem der Ansprüche 2 oder 3, wobei die Schicht (50; 60a, 60b, 60c) Dickenschwankungen aufweist, um hohle Zonen zwischen Zonen mit Überdicke in der Gummischicht zu schaffen, deren Verteilung und deren Abmessungen bestimmt sind, um dem Gummi in den Zonen mit Überdicke zu ermöglichen, sich transversal elastisch in die hohlen Zonen auszudehnen, wenn die Oberseiten der Zonen mit Überdicke durch zur Schicht senkrechte Kompressionsbeanspruchungen stark eingeklemmt werden.

7. Luftreifen (10) nach Anspruch 6, wobei die hohlen Zonen angeordnet sind, um einen Lückengrad im Bereich von 30% bis 70% in der Dicke der Schicht, die die Überdicken enthält, zu schaffen.

8. Luftreifen (10) nach einem der Ansprüche 2 bis 7, wobei die Schicht (50; 60a, 60b, 60c) eine Gummibeschichtung ist, die sich auf der Innenfläche der Wand des Luftreifens befindet.

9. Luftreifen (10) nach einem der Ansprüche 2 bis 8, wobei die Schicht (50; 60a, 60b, 60c) durch wenigstens einen Abschnitt eines Dichtungsgummis auf der inneren Fläche der Wand des Luftreifens gebildet ist.

10. Luftreifen (10) nach Anspruch 9, wobei der innere Dichtungsgummi auf der inneren Fläche der Wand des Luftreifens ein Gummi auf Butyl-Kautschuk-Basis ist.

11. Luftreifen (10) nach Anspruch 6 oder 7 und einem der Ansprüche 8 bis 10, wobei die Oberfläche der Gummischicht (50; 60a, 60b, 60c) im Wesentlichen parallele Rillen (55) aufweist, deren Dichte und deren Amplitude als Funktion des intrinsischen Elastizitätsmoduls des konstitutiven Gummis gewählt sind, um der Schicht (50; 60a, 60b, 60c) den gesuchten globalen Steifigkeitsmodul bei Kompression zu verschaffen.

12. Luftreifen (10) nach Anspruch 11, wobei sich die Gummischicht (50; 60a, 60b, 60c) zu der inneren Oberfläche der Seitenwand wenigstens in einer Zone in der Umgebung der Schulter des Luftreifens und in einer Zone in der unmittelbaren Umgebung des Wulstes (24) erstreckt, derart, dass im Fall eines Quetschens der Hülle unter der Wirkung eines äußeren Hindernisses die innere Oberfläche der Schicht (50; 60a, 60b, 60c) an wenigstens zwei verschiedenen Stellen der Schicht, wo die Rillen (55), deren Scheitelpunkte in Kontakt sind, sich in verschiedenen Richtungen kreuzen, sich selbst berührt.

13. Luftreifen (10) nach Anspruch 11, wobei die Gummischicht (50; 60a, 60b, 60c) eine Dicke über alles von mehr als 1,5 Millimetern besitzt, wobei die Höhe der Rillen (55) dann im Wesentlichen wenigstens gleich 1,5 Millimeter ist.

14. Luftreifen (10) nach einem der Ansprüche 11 bis 13, wobei die Rillen (55) einen im Wesentlichen dreieckigen Querschnitt haben.

15. Luftreifen (10) nach einem der Ansprüche 1 bis 14, wobei das Schutzelement (43-47) in Richtung der "Quetsch"-Beanspruchungen einen globalen Steifigkeitsmodul größer als 0,5 MPa besitzt.

16. Luftreifen (10) nach einem der Ansprüche 1 bis 15, wobei das Schutzelement (43-47) in einem Abschnitt der Wand des Luftreifens in der direkten Umgebung des Wulstes (24) ausgebildet ist.

17. Luftreifen (10) nach einem der Ansprüche 1 bis 16, wobei das Schutzelement (43-47) in einem Abschnitt der Wand des Luftreifens in der Umgebung der Schulter ausgebildet ist.

18. Luftreifen (10) nach den Ansprüchen 16 und 17 in Kombination, wobei sich das Schutzelement (43-47) im Wesentlichen in den gesamten Abschnitt der Wand des Luftreifens zwischen der Schulter und dem Wulst (24) erstreckt.

19. Luftreifen (10) nach einem der Ansprüche 16 bis 18, wobei das Schutzelement (43-47) auf der inneren Oberfläche der Wand des Luftreifens angeordnet ist.
